# EUROPEAN PATENT SPECIFICATION

(11) **EP 0 466 169 B1**
(45) Date of publication and mention of the grant of the patent: **23.11.1994**
(21) Application number: 91111622.6
(22) Date of filing: 12.07.1991
(51) Int. Cl.: D04C 1/06, F16G 1/08, F16G 1/28

(54) **Fiber-reinforced rubber**
Faserverstärktes Gummi
Caoutchouc renforcé de fibres

(30) Priority: 12.07.1990 JP 186090/90
(43) Date of publication of application: 15.01.1992
(73) Proprietor: BANDO CHEMICAL INDUSTRIES, LIMITED, Hyogo-ku Kobe-shi (JP)
(72) Inventor: Nakanishi, Yasuyuki, c/o Bando Chemical Industries, Hyogo-ku, Kobe-shi (JP)
(74) Representative: Gauger, Hans-Peter, Dipl.-Ing.

(56) References cited:
- US-A- 1 400 301
- US-A- 3 584 516
- PATENT ABSTRACTS OF JAPAN, vol. 8, no. 112 (M-298)[1549], 25th May 1984;& JP-A-59 19 744 (MITSUBOSHI BELT) 01-02-1984
- PATENT ABSTRACTS OF JAPAN, vol. 5, no. 183 (M-97)[855], 21st November 1981;& JP-A-56 103 008 (BANDOO KAGAKU) 17-08-1981

## Description

The present invention relates to a fiber-reinforced rubber according to the preamble of claim 1 and known from US-A-3 584 576.

Since high plessley, high elasticity, high dimensional stability, and high adhesive strength has been required for rubbers such as a belt, a tire, and a hose, a reinforcing cord constructed by fibers or a reinforcing canvas is embedded in a rubber. Generally, cords consist of twisted yarns is used for the reinforcement. The cords is grouped into all-yarns-twisted cords, half-yarns-twisted cords, or lang lay. The all-yarns-twisted cords are most popular for reinforcement for a rubber.

However, when the all-yarns-twisted cords are embedded on a rubber as reinforcement, monofilaments rub each other at sharp angle within the all-yarns-twisted cord. Accordingly, the yarn is abraded, broken, or decreased in strength from that rubbed part after short period of usage. Therefore, flex fatigue is lowered.

Japanese Patent Application Laying Open Gazette No. 59-19744 proposed a fiber-reinforced rubber, which reinforcement is constructed by half-yarns-twisted cords or lang lay to solve the above problem (flex fatigue).

However, a rubber reinforced by half-yarns-twisted cords or lang lay is lowered in elongation and rate of tensile elasticity after dipping process, comparing with a rubber reinforced by all-yarns-twisted cords. This results in lower dimensional stability.

Also, since the half-yarns-twisted cords or lang lay are twisted in only one direction, inversion and loose of cords are easily caused at an end. This makes the processing of the cord harder. Furthermore, fray is easily caused in a place where the cord is cut during processing of the cord.

When the half-yarns-twisted cords or lang lay are used as a reinforcement for the industrial belt, there exists a problem such that only one side of the belt is abraded soon since the running belt creeps to one side. This creep is caused by a twisted direction of the cords such like a half-yarns-twisted cord. On the other hand, the Japanese Patent Application Laying Open Gazette No. 56-103008 disclosed a conveyor belt, in which a reinforcement consists of half-yarns-twisted cords of S-twist and Z-twist alternately in order to prevent the uneven abrasion. However, in this case, two cords (both are half-yarns-twisted cords) are set in parallel and spiral in a belt and accordingly, totally four places on right and left sides of the belt are cut in every pair of cords. Therefore, the maintainability of plessley is lowered.

On the other hand, a braided cord has been used for various purposes. Particularly, a tubular braid surpasses in flex fatigue due to its constructional properties, and it is also superior to a twisted cord in dimensional stability. Therefore, the tubular braid will improve both the flex fatigue and dimensional stability if it is used for a reinforcement for a rubber. Furthermore, in processing, the tubular braids possess an advantage such that loose, which occurs in half-yarns-twisted cords and lang lay at an end of cord by the inversion, is not caused. Therefore, cut end is not frayed at processing the tubular braids. Furthermore since tubular braids do not possess the twisted direction which half-yarns-twisted cords possess, the industrial belt maintains stable running without creeping and consequently, uneven abrasion can be prevented.

Although even the tubular braids possess various advantages as mentioned above, it need to be improved since some rubbers, where the tubular braids are embedded for reinforcing, require higher bending fatigue and dimensional stability according to its usage and object.

### SUMMARY OF THE INVENTION

The object of the present invention is to use a tubular braid in stead of a twisted cord for a reinforcement, and specify braid angle, which is an angle between a yarn braided to form a tubular braid and an axial line of the tubular braid, so as to provide a rubber with high flex fatigue, dimensional stability, and longer service life.

In order to achieve the above objects, in a rubber where fiber reinforcement is embedded, the reinforcement is constructed by tubular braids formed by more than three yarns and braid angle is in a range between 10 ° and 35° .

### BRIEF DESCRIPTION OF THE DRAWING

Fig. 1 is an enlarged vertical side section of a tubular cord.

Fig. 2 is an enlarged vertical front section of a tubular cord.

Fig. 3 is a vertical front section of a synchronous belt.

Fig. 4 is an explanatory drawing of the testing system for flex fatigue.

Fig. 5 is a graph showing braid angle, maintainability of plessley, and belt elongation.

### DESCRIPTION OF THE PREFERRED EMBODIMENT

Preferred embodiment will be described below in reference to accompanying drawings.

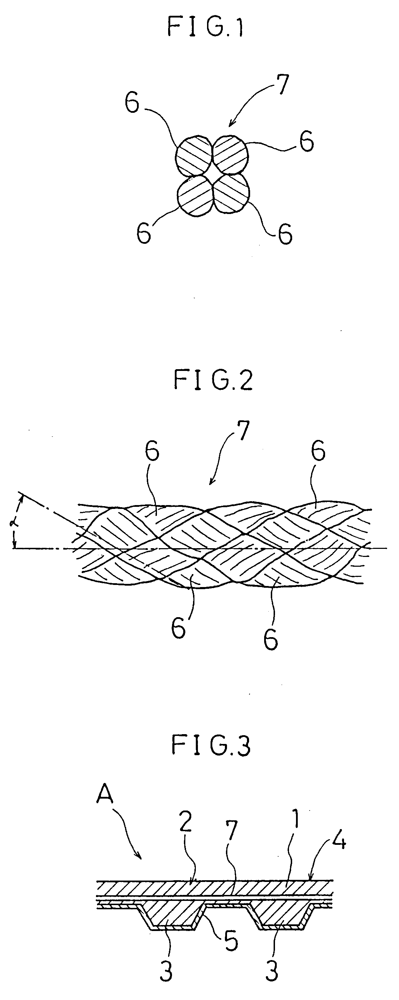

Fig.3 illustrates a synchronous belt A which is a fiber-reinforced rubber. The synchronous belt A comprises a belt base 4 having a stretching rubber layer 1 and a plurality of teeth 3 formed over one side thereon (only two teeth are shown in lower side of the belt in Fig.3). A plurality of teeth 3 are made of the same material, a rubber, as the stretching rubber layer 1. A fiber reinforcement 2 is embedded on the stretching rubber layer 1 of the belt base 4. A canvas layer 5 is adhered on a surface of teeth 3 of the belt base 4.

The present invention is characterized in that the reinforcement 2, as shown in enlarged and detailed illustrations of Figs. 1 and 2, is constructed by a plurality of tubular braids 7 braided by more than three yarns 6 of (four yarns in the present embodiment) at braid angle ( α) of 10 ° ∼35° , where the braid angle refers to an angle between a yarn braided to form a braid and an axial line of the braid.

The yarns 6 may consist of inorganic fibers, organic fibers, or metallic fibers. Further, short or long fiber spun yarns or combinations of those can be used for the yarns 6 according to the required performance of the synchronous belt A.

Also, the number of yarns 6 can be more than three, preferrably more than four and even number. In order to make a cord of tubular configuration, the number of yarns should be more than three. More than four and even number of yarns can make a tubular cord having a symmetrical fistrous part. The total denier number and the number of monofilament vary according to the required performance of the synchronous belt A.

The tubular braid 7 go through adhesive process, which the braid is soaked into adhesive combined with epoxy resin, isocyanate compound, ethylene urea compound, and resorcin formal in latex (RFL), etc. and stretching process before it is embedded in the stretching rubber layer 1. Dipping process is preferable for the adhesive process in order that adhesive soak through evenly from surface to inside of the tubular braid.

A flex fatigue test of the synchronous belt A is carried out under hereinafter described conditions. The result of a flex fatigue test is shown in Fig. 5 with belt elongation. White circles ○ in Fig. 5 show maintainabililty of plessley of a belt and black circles ● show belt elongation.

### 〈Construction of Synchronous Belt A〉

Four 1500de Kevlar (product of Du Pont) are used for tubular braids 7 constructing a reinforcement 2. Braid angle ( α) is set 5° , 10° , 20° , 30° , 40° for each tubular braid. The tubular braid 7 is dipped into the isoayanate compound so as to form a sub-coat ply, then it is dipped into the adhesive combination liquid of resorcin formalin latex (RFL) so as to form a second-coat ply, further it is dipped into chloroprene rubber so as to form a top-coat ply, and finally it is processed a stretching process with 1g/de tension. The synchronous belt A, wherein the reinforcement 2 consists of a plurality of the tubular braids 7 embedded on the belt base 4, is obtained by the following this ordered steps: a plurality of tubular braids 7 finished the stretching process is put spirally on the stretching rubber layer 1 of the chloroprene rubber, the teeth 3 of the chloroprene rubber is formed on it so that the tubular braid 7 is embedded thereon, the nylon cloth 5 is adhered on the surface of teeth 3, and the rubber is cured. The adhesive soaks through the tubular braid 7 evenly from the surface to the inside of it during the adhesive process.

### 〈Test on Flex Fatigue〉

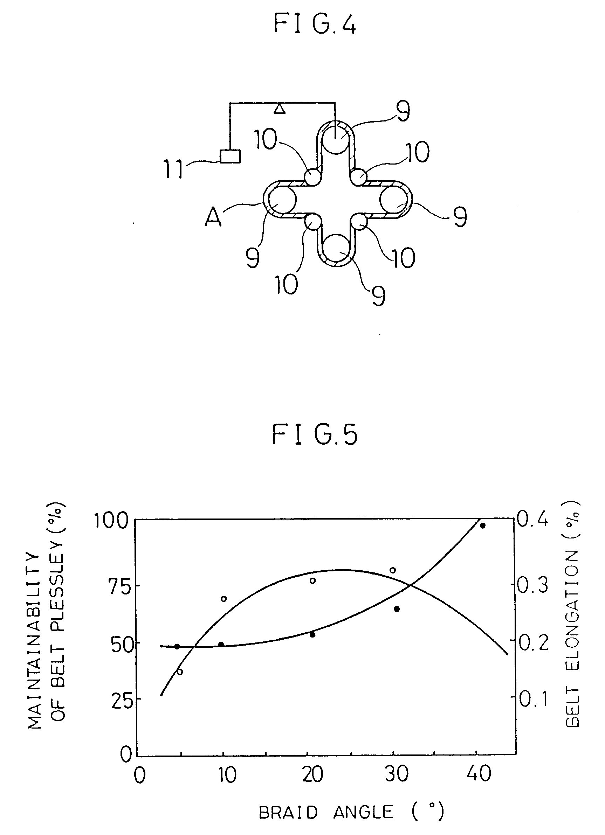

The test was carried out by the system shown in Fig.4, where the synchronous belt A is wound round four large pulleys 9 and four small pulleys 10 interposed between large pulleys 9, and a predetermined tension is applied to the synchronous belt A by a weight 11. The synchronous belt A is run by 1×10⁸ times. The above small pulleys 10 are 30mm in diameter. One cycle refers to that the synchronous belt A goes through all the four small pulleys 10, i.e., four belt flex.

As shown in the test data on Fig. 5, when the braid angle ( α) is 40 ° , belt elongation is high and accordingly, the dimensional stability of the synchronous belt A becomes worse. However, when the braid angle ( α) is less than 30° , belt elongation is lowered and accordingly, dimensional stability of the belt A is improved.

Furthermore, when the braid angle ( α) is less than 10° or more than 35 ° , maintainability of plessley of a belt is lowered and accordingly, flex fatigue of the synchronous belt A becomes worse. On the other hand, when the braid angle ( α) is in a range between 10° and 35° , maintainability of plessley of a belt becomes high and flex fatigue of the synchronization belt A is improved. Consequently, when the braid angle (α) of yarns 6 is in a range between 10° and 35° , longer service life of the synchronous belt is obtained.

In the present embodiment, reinforcement 2 embedded in the belt base 4 is constructed by the tubular braids 7 which is braided by more than three yarns 6 at the braid angle (α ) between 10° and 35° . Therefore, the yarns 6 contribute greatly to improvement of elongation and plessley of the synchronous belt A, and also flex fatigue and dimensional stability of the synchronous belt A are improved. Thus, the service life of the synchronous belt A becomes longer.

In the above embodiment, if the center cord is provided in a center hole of the tubular cord 7, the dimensional stability, in addition to the flex fatigue, will be improved.

Moreover, in the present embodiment, the synchronous belt A is shown as a rubber. However, the belt is not limited to the synchronous belt A, but covers an industrial belt such as a conveyor belt and a transmission belt like a flat belt and a ribbed belt. The present invention also can be applied to rubbers other than belts, for example, tires and hoses.

## Claims

1. A fiber-reinforced rubber having a fiber reinforcement embedded thereon, said fiber reinforcement comprising
a plurality of tubular braids which are braided by more than three yarns characterized by a braid angle in a range between 10 ° and 35° , where said braid angle refers to an angle between a yarn forming said tubular braid and an axial line of said tubular braid.

2. A fiber-reinforced rubber as claimed in Claim 1, wherein said tubular braids consist of yarns of inorganic fibers.

3. A fiber-reinforced rubber as claimed in Claim 1, wherein said tubular briads consist of yarns of organic fibers.

4. A fiber-reinforced rubber as claimed in Claim 3, wherein said organic fibers of said yarns are aramid fibers.

5. A fiber-reinforced rubber as claimed in Claim 1, wherein said tubular braids consist of yarns of metallic fibers.

6. A fiber-reinforced rubber as claimed in Claim 1, wherein said tubular braids consist of long fiber spun yarns.

7. A fiber-reinforced rubber as claimed in Claim 1, wherein said tubular braids consist of short fiber spun yarns.

8. A fiber-reinforced rubber as claimed in Claim 1, wherein a center cord is provided at a center hole of said tubular braid.

9. A fiber-reinforced rubber as claimed in Claim 1, which is a power transmission belt.

10. A fiber-reinforced rubber as claimed in Claim 9, wherein said power transmission belt is a synchronous belt, a belt base of said synchronous belt comprises a stretching rubber layer and a plurality of teeth which is formed on one side of said stretching rubber layer and composed of the same material as said stretching rubber layer, and said fiber reinforcement is embedded in said stretching rubber layer.

11. A fiber-reinforced rubber as claimed in Claim 1, which is a conveyor belt.

12. A fiber-reinforced rubber as claimed in Claim 1, which is a tire.

13. A fiber reinforced rubber as claimed in Claim 1, which is a hose.

## Patentansprüche

1. Faserverstärkerter Gummi mit einer darauf eingebetteten Faserverstärkung, wobei die Faserverstärkung besteht aus
einer Vielzahl rohrförmiger Geflechte, die aus mehr als drei Garnen geflochten sind, gekennzeichnet durch einen Geflechtwinkel in einem Bereich zwischen 10° und 35°, wobei sich der Geflechtwinkel auf einen Winkel zwischen einem das rohrförmige Geflecht bildenden Garn und einer axialen Linie des rohrförmigen Geflechts bezieht.

2. Faserverstärkter Gummi nach Anspruch 1, bei welchem die rohrförmigen Geflechte aus Garnen aus anorganischen Fasern bestehen.

3. Faserverstärkter Gummi nach Anspruch 1, bei welchem die rohrförmigen Geflechte aus Garnen aus organischen Fasern bestehen.

4. Faserverstärkter Gummi nach Anspruch 3, bei welchem die organischen Fasern der Garne Aramidfasern sind.

5. Faserverstärkter Gummi nach Anspruch 1, bei welchem die rohrförmigen Geflechte aus Garnen von metallischen Fasern bestehen.

6. Faserverstärkter Gummi nach Anspruch 1, bei welchem die rohrförmigen Geflechte aus langen fasergesponnenen Garnen bestehen.

7. Faserverstärkter Gummi nach Anspruch 1, bei welchem die rohrförmigen Geflechte aus kurzen fasergesponnenen Garnen bestehen.

8. Faserverstärkter Gummi nach Anspruch 1, bei welchem ein mittlerer Faden in einem Mittelloch des rohrförmigen Geflechts vorgesehen ist.

9. Faserverstärkter Gummi nach Anspruch 1, welcher ein Kraftübertragungsriemen ist.

10. Faserverstärkter Gummi nach Anspruch 9, bei welchem der Kraftübertragungsriemen ein Zahnriemen ist, wobei eine Riemenbasis dieses Zahnriemens aus einer Streckgummischicht und einer Vielzahl von Zähnen besteht, die an einer Seite der Streckgummischicht ausgebildet sind und aus demselben Material wie die Streckgummischicht bestehen, und wobei die Faserverstärkung in die Streckgummischicht eingebettet ist.

11. Faserverstärkter Gummi nach Anspruch 1, welches ein Förderriemen ist.

12. Faserverstärkter Gummi nach Anspruch 1, welches ein Reifen ist.

13. Faserverstärkter Gummi nach Anspruch 1, welches ein Schlauch ist.

## Revendications

1. Caoutchouc renforcé par fibres, à un renforcement par fibres noyé de dessus, ce renforcement par fibres comprenant:
une pluralité de tresses tubulaires qui sont tressées par plus de trois fils,
**caractérisé** par un angle de tressage dans la gamme entre 10° et 35°, ledit angle de tressage se référant à un angle entre un fil formant ladite tresse tubulaire et une ligne axiale de ladite tresse tubulalre.

2. Caoutchouc renforcé par fibres selon la revendication 1,
dans lequel lesdites tresses tubulaires consistent en fils en fibres inorganiques.

3. Caoutchouc renforcé par fibres selon la revendication 1,
dans lequel lesdites tresses tubulaires consistent en fils en fibres organiques.

4. Caoutchouc renforcé par fibres selon la revendication 3,
dans lequel lesdites fibres organiques desdits fils sont des fibres en aramide.

5. Caoutchouc renforcé par fibres selon la revendication 1,
dans lequel lesdites tresses tubulaires consistent en fils en fibres métalliques.

6. Caoutchouc renforcé par fibres selon la revendication 1,
dans lequel lesdites tresses tubulaires consistent en longues fils en fibres filés

7. Caoutchouc renforcé par fibres selon la revendication 1,
dans lequel lesdites tresses tubulaires consistent en courts fils en fibres filés.

8. Caoutchouc renforcé par fibres selon la revendication 1,
dans lequel une corde centrale est prévue à un trou central de ladite tresse tubulaire.

9. Caoutchouc renforcé par fibres selon la revendication 1, qui constitue une courroie de transmission.

10. Caoutchouc renforcé par fibres selon la revendication 9,
auquel ladite courroie de transmission est une courroie de transmission dentée, et dans lequel une base de courroie de ladite courroie de transmission dentée comprend une couche en caoutchouc d'allongement et une pluralité de dents, qui est formée d'un côté de ladite couche en caoutchouc d'allongement et composée de la même matière que ladite couche en caoutchouc d'allongement, et dans lequel ledit renforcement à fibres est noyé dans ladite couche en caoutchouc d'allongement.

11. Caoutchouc renforcé par fibres selon la revendication 1, qui constitue une courroie de transport.

12. Caoutchouc renforcé par fibres selon la revendication 1, qui constitue un pneumatique.

13. Caoutchouc renforcé par fibres selon la revendication 1, qui constitue un tuyau souple.
